# EUROPEAN PATENT APPLICATION

(11) **EP 1 075 129 A1**
(43) Date of publication of application: **07.02.2001**
(21) Application number: 99306268.6
(22) Date of filing: 06.08.1999
(51) Int. Cl.: H04M 3/22, H04M 7/00

(54) **Test method for computer telephony**

(71) Applicant: BRITISH TELECOMMUNICATIONS public limited company, London EC1A 7AJ (GB)
(72) Inventor: The designation of the inventor has not yet been filed
(74) Representative: Evershed, Michael

(57) **Abstract**

A method of quantifying transmission quality in computer telephony links. A test application sends a test signal to a soundcard driver modified to interface with the test application. The test signal is injected into the computer telephony packets and the receiving computer telephony terminal may extract the test signal from the computer telephony packets in order to analyse the transmission quality.

## Description

This invention relates to a test method for use with computer based telephony.

Conventional telephony services are based upon the provision of a dedicated circuit to connect two telephony users via an exchange. The set-up and maintenance of the circuit have an associated cost, but the dedicated circuit allows a guaranteed quality of service (QoS) for the telephony service provided over the circuit. In contrast, computer communications made over packet based networks do not involve the set-up and maintenance of a circuit, but instead a stream of packets are routed from one computer to a second computer. The route taken by consecutive packets, may vary according to changes in network performance, congestion, etc. One of the disadvantages of packet-based networks when compared with circuit-based networks is that there is no guarantee that all of the packets transmitted by a computer will arrive at the destination computer or that those packets that are received by the destination computer will arrive in the same order that they were transmitted. Packets can be re-transmitted following a prompt by the destination computer and the application should be capable of re-ordering the received packets into the correct sequence and these steps are of little consequence if the data being transmitted between the computers does not have any time dependence., for example a file transfer, the transmission of an email message, etc. However, if the computers are transmitting real-time data, such as telephony or audio-visual signals for example, then the reception of out of sequence packets and the failure to receive some packets in time, or not at all, may cause significant problems with the playback of the real-time data.

Despite these disadvantages, it is perceived that in the near future most high capacity communications networks will be packet-based networks which will carry all forms of data, including real-time data such as speech and video. It is currently possible to use the public Internet to carry telephony services (often referred to as computer telephony (CT), PC telephony, Internet telephony or voice over IP (VolP)) but the relatively low bandwidth available to Internet users means that such services tend to be of low quality. If such services are to be made commercially available over, for example, Intranets, Extranets, private data networks, etc., then it will be necessary to supply them with a Quality of Service (QoS) that is comparable with that of traditional, circuit-based telephony networks. In order for network and service providers to be able to achieve this objective they will need to have a means of measuring and controlling the QoS of CT services.

According to a first aspect of the invention there is provided a soundcard driver characterised in that the soundcard driver comprises an output interface for sending test signals to a computer telephony test process. The test signals may be extracted from the data contents of a plurality of computer telephony packets.

Preferably, the soundcard driver additionally comprises an input interface for receiving test signals from the computer telephony test process, said test signals being inserted into a plurality of computer telephony packets. The invention additionally provides a data carrier containing computer code for loading into a computer for the above soundcard drivers and further provides a soundcard comprising a soundcard driver as described above.

According to a second aspect of the invention there is provided a method of inserting a test signal into a plurality of computer telephony packets in a telephony terminal, the method comprising the steps of:
(i) generating a test signal within a computer telephony test process;
(ii) transmitting the test signal to a soundcard driver;
(iii) inserting the test signal into a plurality of voice-data packets; and
(iv) processing said plurality of voice-data packets to obtain a plurality of computer telephony packets, the computer telephony packets carrying the test signal. Alternatively, step (iv) of the method comprises:
(iv) processing said plurality of voice-data packets to obtain a plurality of computer telephony packets, the computer telephony packets carrying both the test signal and voice data.

According to a third aspect of the invention there is provided a method of extracting a test signal from a plurality of computer telephony packets in a telephony terminal, the method comprising the steps of:
(i) processing a plurality of computer telephony packets received by the telephony terminal to obtain a plurality of voice-data packets;
(ii) transmitting the plurality of voice-data packets to a soundcard driver; and
(iii) extracting the test signal from the plurality of voice-data packets. Additionally, the test signal is derived from the voice signal contained within the voice-data packets.

According to a fourth aspect of the invention there is provided a method of measuring transmission quality of a computer telephony service between a first telephony terminal and a second telephony terminal, the method comprising the steps of:
(i) generating a test signal within a test process in the first telephony terminal;
(ii) transmitting the test signal to a soundcard driver in the first telephony terminal;
(iii) inserting the test signal into a plurality of voice-data packets;
(iv) processing said plurality of voice-data packets to obtain a plurality of computer telephony packets, the computer telephony packets carrying the test signal;
(v) transmitting the plurality of computer telephony packets from the first telephony terminal to a second telephony terminal;
(vi) processing the plurality of computer telephony packets in the second terminal to obtain a plurality of voice-data packets;
(vii) sending the plurality of voice-data packets to a soundcard drive;
(viii) extracting the test signal from the plurality of voice-data packets; and
(ix) analysing the extracted test signal to evaluate the transmission quality.
Alternatively, step (iv) of the method comprises:
(iv) processing said plurality of voice-data packets to obtain a plurality of computer telephony packets, the computer telephony packets carrying both the test signal and voice data. The method may comprise the further step of;
(x) communicating the signal quality analysis to the first terminal.

According to a fifth aspect of the invention there is provided a method of measuring transmission quality of a computer telephony service between a first telephony terminal and a second telephony terminal, the method comprising the steps of:
(i) transmitting a plurality of computer telephony packets from the first terminal to the second terminal;
(ii) processing the plurality of computer telephony packets in the second terminal to obtain a plurality of voice-data packets;
(iii) sending the plurality of voice-data packets to a soundcard driver;
(iv) deriving the test signal from the voice signal contained within the plurality of voice-data packets; and
(v) analysing the extracted test signal to evaluate the transmission quality. The method may comprise the further step of ;
(vi) communicating the signal quality analysis to the first terminal.

According to a sixth aspect of the invention there is provided a telephony terminal comprising means for converting an analogue voice signal into computer telephony transmission data packets and converting computer telephony transmission data packets into an analogue voice signal and means for analysing computer telephony data packets received by the telephony terminal to evaluate the transmission quality of a computer telephony service between said terminal and another telephony terminal. Additionally, the terminal may further comprise means for inserting a test signal into said computer telephony transmission data packets and means for extracting a test signal from computer telephony transmission data packets received by said terminal for use by said analysing means.

The invention will now be described, by way of example only, with reference to the following figures in which;
Figure 1 shows a functional block diagram of a computer telephony terminal;
Figure 2 shows a functional block diagram of a computer telephony terminal incorporating the present invention;
Figure 3 shows a schematic depiction of computer telephony terminals connected to a communications network ; and
Figure 4 shows a functional block diagram of a computer telephony system incorporating a preferred embodiment of the present invention.

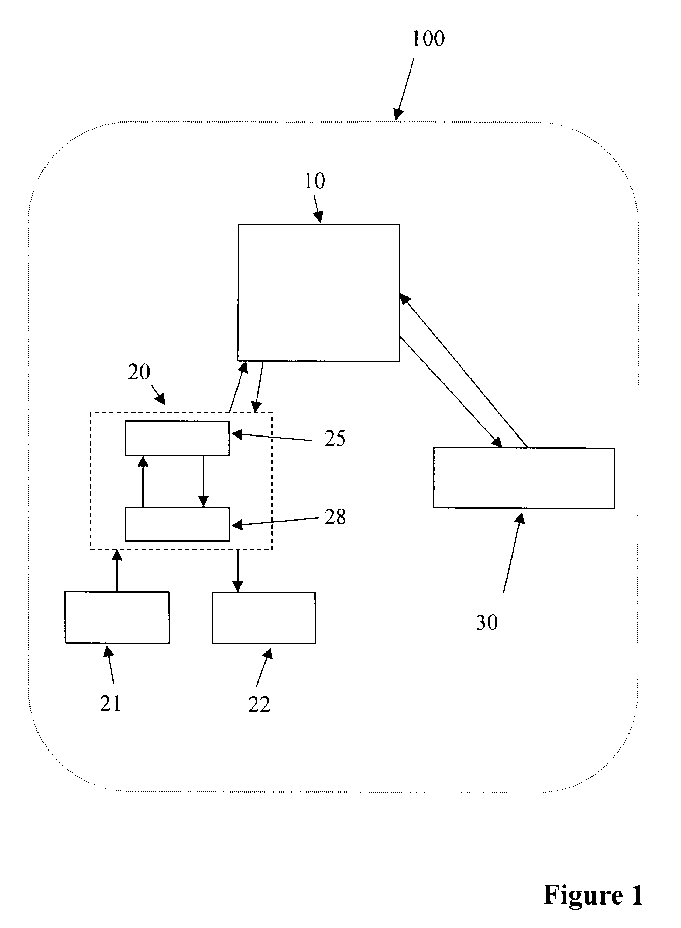

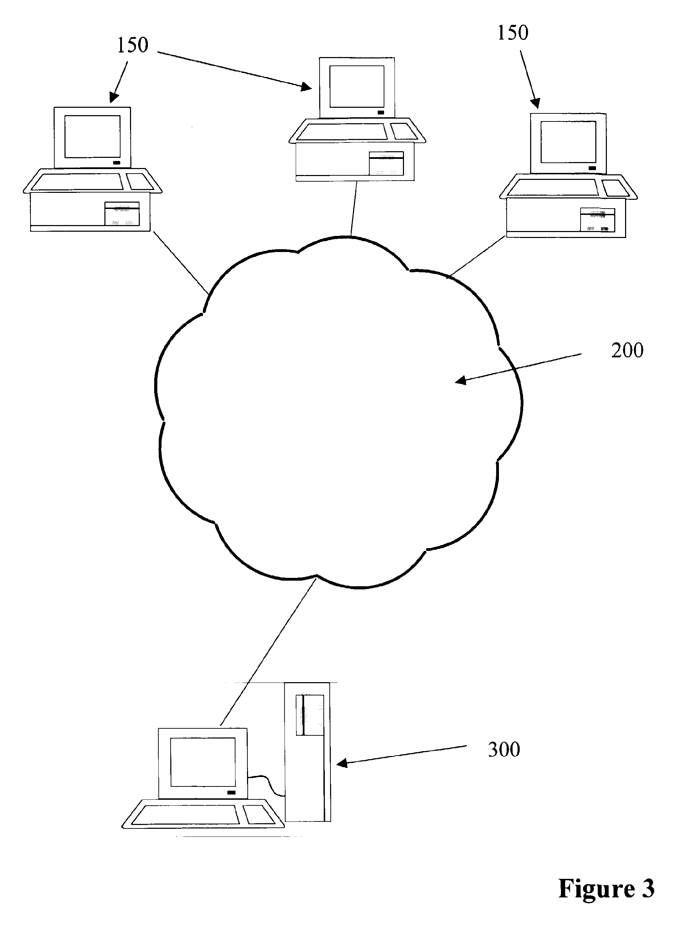

Figure 1 shows a functional block diagram of a computer telephony terminal. The computer telephony terminal is implement as a computer. The computer includes a central processing unit, memory and storage devices and various hardware devices such as a display unit and a keyboard. The computer has an operating system (indicated by reference numeral 100 in Figure 1) stored in the memory and storage devices. Software applications such as a word processor application and an Internet browser may also be stored in the memory and storage devices and run under the operating system. As will now be described with reference to Figure 1, the computer includes a software application and hardware to provide it with the functionality of a computer telephony terminal. As shown in Figure 1, the computer telephony terminal includes a computer telephony (CT) software application 10, which is a process that is run under the computer operating system 100. The CT application is used to establish a communication link with a CT application which is being run on a second computer, which is connected to the first computer via a communications network (see Figure 3). It is also possible for the CT application to communicate with a standard telephone which is connected to the PSTN (public switched telephony network) if there is a suitable gateway from the communications network to the PSTN. Additionally, the CT application may communicate with a so-called 'internet phone' which has the appearance and functionality of a conventional telephone but instead of connecting to, and communicating via, the PSTN such 'internet phones' are connected to the communication network and provide the same functionality as a computer running a CT application but at much reduced cost and complexity (see *"Voice-Data Convergence and the Corporate Voice-Over-IP Trial",* A Catchpole, IBTE Journal, volume 17, part 4, January 1999, pages 218-224).

The CT application 10 communicates with a CT application in an other computer, or internet phone, by sending and receiving data transmission packets, the data packets containing short segments of speech. The CT application 10 communicates with the computer's soundcard 20, which is connected to a microphone 21 and a loudspeaker(s) 22 (the microphone and loudspeaker(s) may be integrated and take the form of a headset or a conventional telephony handset). The user's voice signal is captured by the microphone 21 and then the soundcard converts the analogue signal supplied by the microphone into digital voice data. This digital voice data is then sent to the CT application, which may perform some form of data modulation or compression in order to increase the efficiency of the data transmission across the network before the digital voice data is arranged into packets of a suitable size (either in terms of the number of bytes of the package or in terms of the length of speech that is represented by the digital voice data). These voice data packets are sent to the communications interface 30 such that the voice data therein may be transmitted to the destination computer. The communications interface 30 may be a modem for dial-up access to a packet-based network or it may be a network card for direct access to a packet-based network. The communications interface places the voice data packets within the payload of the data transmission packets used by the communications interface, for example TCP (Transmission Control Protocol), UDP (User Datagram Protocol), etc. The data transmission packets are then routed across the communications network (see Figure 3) to the destination computer, where the analogue speech signal is recovered in a manner described below.

The communications interface 30 receives data transmission packets that have been sent to the computer and differentiates the data transmission packets by their content, for example part of a stream of computer telephony packets, a WWW download, an email message, etc. For CT data, the voice data packets are extracted from the payload of the data transmission packets and are then sent to the CT application 10. The CT application processes the voice data packets, ordering them in the correct sequence and demodulating (and/or decompressing) the data as necessary so that a stream of digital voice data can be sent to the soundcard 20, which converts the data from a digital signal to an analogue signal, which can then be played back to the user through the loudspeaker(s) 22.

The soundcard provides functionality using both hardware 28, which interfaces with the external hardware (loudspeakers, microphone, etc.) and the internal bus of the computer, and software drivers 25 stored in a memory device, which may be mounted on the soundcard, which allow the operating system and the applications running on the computer to access functions that cause the hardware to respond accordingly.

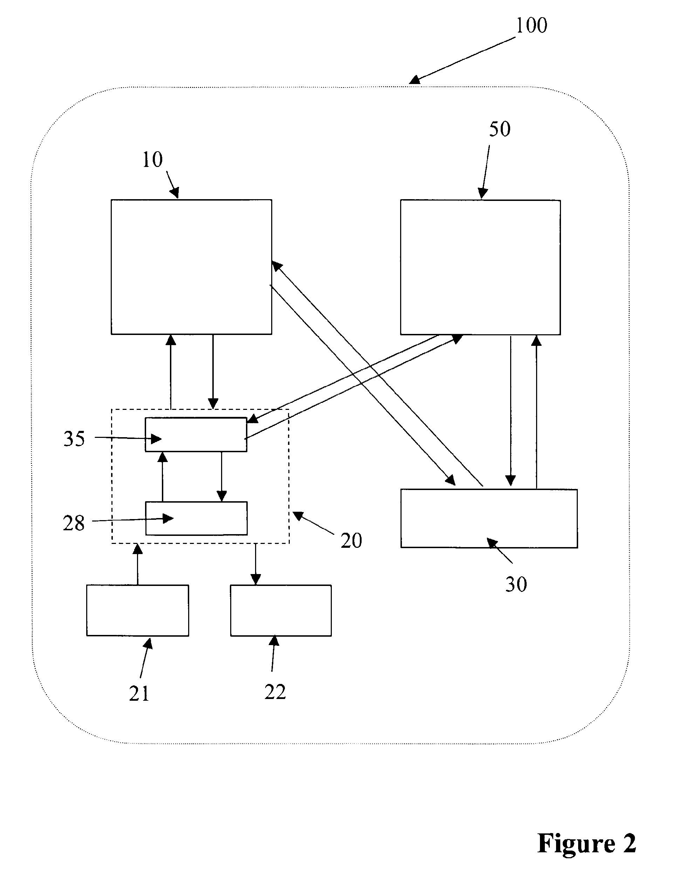

Figure 2 shows a schematic representation of a computer telephony terminal incorporating the present invention. The CT terminal shown in Figure 2 is generally similar to the CT terminal of Figure 1 but modified as described below. Test application 50 is a software process running under the computer operating system in parallel with the CT application 10 and any other software applications. The soundcard software drivers 25 shown in Figure 1 have been replaced with modified soundcard drivers 35. These modified drivers have all the functionality required to operate under the operating system 100 (as do the soundcard drivers 25 shown in Figure 1 ) plus additional functionality in order to interface with the test application.

The test application 50 interfaces with the modified soundcard drivers so that test signals can be injected into the digital voice data before it is passed to the CT application for onward transmission. Similarly, the test application 50 can extract test signals from received digital voice data that have been passed from the CT application to the soundcard and analyse the extracted test signals in order to determine the transmission quality. If non-intrusive test methods are being used, i.e. the spectral properties of the received speech signals are being analysed, then no test signals are injected into the digital voice data packets and the test application needs to take a copy of the digital voice data that has been sent from the CT application to the soundcard. When two computers, each arranged as shown in Figure 2, are connected to a communications network, and a telephony link is established between the computers, it is possible to measure the quality of the telephony link. More specifically, the test application in one computer can cause test signals to be injected into voice data packets generated by the CT application, so that the voice data packets may contain only a test signal or a combination of a voice signal and a test signal. The test signal can be analysed by the test application in the other computer. The test signal may measure delay, frequency shaping, temporal clipping in the communications link. The test signals may also be used to assess speech quality using known perceptual analysis methods (see, for example, EP-B-0 647 375, EP-A-0 776 566 & EP-A-0 776567). As mentioned above, the test application may be used to perform both intrusive or non-intrusive tests. However, depending upon the nature of the test, intrusive tests may be unsuitable for a telephony link which is carrying real telephony traffic. If a non-intrusive test method is used, then the voice-data packets will only contain voice signals.

By analysing the received test signals, the test applications 50 can be used to quantify the QoS for the computer telephony link between the two computers. If the QoS is inadequate then the test application 50 may communicate with the operational support services (OSSs) which are used to manage the network over which the CT services are being provided. These OSSs will attempt to increase the QoS, for example, by allocating more resources to the two computers 100 or by increasing the priority of the CT data in the routers and/or switches over non-real time data. Referring now to Figure 3, there is shown three client computers 150 and a server computer 300 connected to a packet-based communications network 200. Each of the client computers 150 takes the form of the computer telephony terminal shown in Figure 2. Each of the client computers 150 may be connected to the network 200 by a dial-up connection or by a direct connection. The server computer 300 comprises a communications interface, a computer telephony application, a test application and a soundcard. The server computer 300 may make computer telephony connections with each of the client computers 150 or with other suitably equipped computers solely for the purpose of testing the quality of the computer telephony connection. Each client computer 150 may communicate QoS results to the server computer 300 (whether generated from a connection with the server computer or with another client computer) so that QoS data can be collected for the network 200. This enables network managers and or administrators to monitor the QoS variations of the network 200 and allocate network resources accordingly.

The server computer 300 may also be used when a new computer is connected to a network to quantify the computer telephony performance of the newly connected compute. The same process may also be used when computer telephony functionality is added to a networked computer to determine the QoS of the computer's telephony functionality. More specifically, when a client computer, such as one of the computers 150 is connected to the network 200, it can transmit a predetermined set of test signals to the server computer 300. The server computer 300 can analyse the test signals to determine whether the client computer has been correctly configured for use in computer telephony. The results of the analysis can then be fed back to the client computer so that the client computer can be more optimally configured. A client computer may also be tested in this way at periodic intervals.

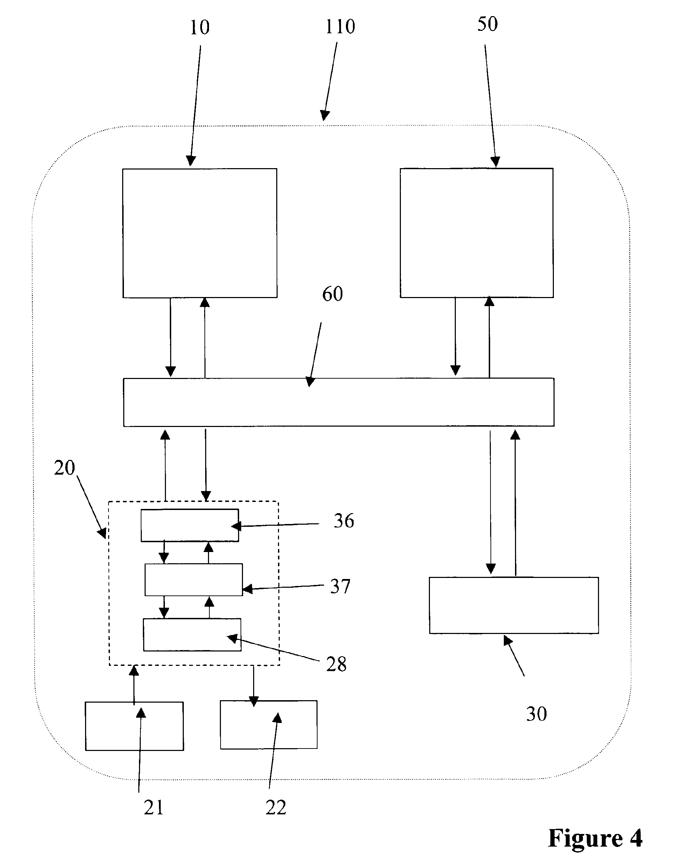

Figure 4 shows a functional block diagram of a computer telephony terminal incorporating a preferred embodiment of the present invention. The CT terminal shown in Figure 4 is generally similar to the CT terminal shown in Figure 2, but modified as will now be described. In the CT terminal in Figure 4, the computer telephony application 10 and a test application 50 run under the Windows 95 operating system 110. The CT application 10 accesses the Windows 95 APIs (Application Programming Interfaces) 60 in a known manner in order that the CT application is able to access all of the resources available from the computer hardware and the operating system. Using the DirectSound functionality, the APIs address the DirectSound DLL (Dynamic Linked Library (commonly referred to as dsoundx.dll)). The DirectSound DLL communicates with a dummy device driver 36 (referred to as dds.dev as it is the dummy ds.dev file) which communicates with a virtual device driver (VxD) 37 of the soundcard 20 {the dds.dev 36 and the soundcard VxD 37 combine to form the soundcard driver 35 of Figure 2}. It is preferred, for ease of programming, to add the functionality required to interface with the test application 50 to the dds.dev 36 driver rather than the VxD 37, although as this preference is due to a lack of tools and an environment in which to develop VxDs, as and when such tools become available then there will be little preference attached to the addition of functionality to either the dds.dev 36 driver or the VxD 37. Additionally, it is to be understood that the required functionality could be added to the VxD or to the combination of the dds.dev and the VxD. The CT application 10 and the CT test application 50 function as described above.

Although it is preferred to implement the present invention for a computer using the Windows 95 operating system, it will be readily understood that the invention is equally applicable for use with other operating systems such as other Windows variants (Windows 3.1, Windows NT, Windows 98, Windows 2000, etc.) MacOS, BeOS, Linux and Unix variants, etc.

It should be understood that although the above discussion has focused upon the addition of test functionality into a computer running a computer telephony application, the same test functionality can be incorporated into an Internet phone, network computer, set top box or other network device that provides computer telephony functionality. In such a case the invention may be implemented using solely software, solely hardware or a combination of software and hardware

## Claims

1. A soundcard driver characterised in that the soundcard driver comprises an output interface for sending test signals to a computer telephony test process.

2. A soundcard driver as claimed in claim 1, wherein the test signals are extracted from the data contents of a plurality of computer telephony packets.

3. A soundcard driver as claimed in claim 1 or claim 2, wherein the soundcard driver additionally comprises an input interface for receiving test signals from the computer telephony test process, said test signals being inserted into a plurality of computer telephony packets.

4. A data carrier containing computer code for loading into a computer for the performance of any of claims 1 to 3.

5. A method of inserting a test signal into a plurality of computer telephony packets in a telephony terminal, the method comprising the steps of:
(i) generating a test signal within a computer telephony test process;
(ii) transmitting the test signal to a soundcard driver;
(iii) inserting the test signal into a plurality of voice-data packets; and
(iv) processing said plurality of voice-data packets to obtain a plurality of computer telephony packets, the computer telephony packets carrying the test signal.

6. A method according to claim 5, wherein step (iv) of the method comprises:
(iv) processing said plurality of voice-data packets to obtain a plurality of computer telephony packets, the computer telephony packets carrying both the test signal and voice data

7. A method of extracting a test signal from a plurality of computer telephony packets in a telephony terminal, the method comprising the steps of:
(i) processing a plurality of computer telephony packets received by the telephony terminal to obtain a plurality of voice-data packets;
(ii) transmitting the plurality of voice-data packets to a soundcard driver; and
(iii) extracting the test signal from the plurality of voice-data packets.

8. A method of extracting a test signal according to claim 7 wherein the test signal is derived from the voice signal contained within the voice-data packets.

9. A method of measuring transmission quality of a computer telephony service between a first telephony terminal and a second telephony terminal, the method comprising the steps of:
(i) generating a test signal within a test process in the first telephony terminal;
(ii) transmitting the test signal to a soundcard driver in the first telephony terminal;
(iii) inserting the test signal into a plurality of voice-data packets;
(iv) processing said plurality of voice-data packets to obtain a plurality of computer telephony packets, the computer telephony packets carrying the test signal;
(v) transmitting the plurality of computer telephony packets from the first telephony terminal to a second telephony terminal;
(vi) processing the plurality of computer telephony packets in the second terminal to obtain a plurality of voice-data packets;
(vii) sending the plurality of voice-data packets to a soundcard driver;
(viii) extracting the test signal from the plurality of voice-data packets; and
(ix) analysing the extracted test signal to evaluate the transmission quality.

10. A method according to claim 9 wherein step (iv) of the method comprises:
(iv) processing said plurality of voice-data packets to obtain a plurality of computer telephony packets, the computer telephony packets carrying both the test signal and voice data.

11. A method according to claim 9 or claim 10, wherein the method comprises the further step of ;
(x) communicating the signal quality analysis to the first terminal.

12. A method of measuring transmission quality of a computer telephony service between a first telephony terminal and a second telephony terminal, the method comprising the steps of:
(i) transmitting a plurality of computer telephony packets from the first terminal to the second terminal;
(ii) processing the plurality of computer telephony packets in the second terminal to obtain a plurality of voice-data packets;
(iii) sending the plurality of voice-data packets to a soundcard driver;
(iv) deriving the test signal from the voice signal contained within the plurality of voice-data packets; and
(v) analysing the extracted test signal to evaluate the transmission quality.

13. A method according to claim 12, wherein the method comprises the further step of ;
(vi) communicating the signal quality analysis to the first terminal.

14. A soundcard comprising a soundcard driver as claimed in any of claims 1 to 3.

15. A telephony terminal comprising:
means for converting an analogue voice signal into computer telephony transmission data packets and converting computer telephony transmission data packets into an analogue voice signal; and
means for analysing computer telephony data packets received by the telephony terminal to evaluate the transmission quality of a computer telephony service between said terminal and another telephony terminal.

16. A telephony terminal as claimed in claim 15, further comprising: means for inserting a test signal into said computer telephony transmission data packets; and
means for extracting a test signal from computer telephony transmission data packets received by said terminal for use by said analysing means.
